# EUROPÄISCHE PATENTSCHRIFT

(11) **EP 2 536 885 B1**
(45) Veröffentlichungstag und Bekanntmachung des Hinweises auf die Patenterteilung: **11.12.2013**
(21) Anmeldenummer: 11705847.9
(22) Anmeldetag: 16.02.2011
(51) Int. Cl.: F16L 41/08, E03B 7/07, F16L 41/16

(54) **WASSERANSCHLUSSANORDNUNG MIT VERBINDUNGSEINHEIT**
WATER CONNECTION ARRANGEMENT WITH ATTACHMENT UNIT
SYSTÈME DE PRISE D'EAU DOTÉ D'UNE UNITÉ DE LIAISON

(30) Priorität: 19.02.2010 DE 102010002153
(43) Veröffentlichungstag der Anmeldung: 26.12.2012
(73) Patentinhaber: Judo Wasseraufbereitung GmbH, 71364 Winnenden (DE)
(72) Erfinder: SÖCKNICK, Ralf, 70806 Kornwestheim (DE); FIESS, Helmut, 71576 Burgstetten (DE); GHASEM-ZADEH, Farid, 71522 Backnang (DE); HÄNISCH, Bastian, 71546 Aspach (DE)
(74) Vertreter: Kohler Schmid Möbus
(86) Internationale Anmeldenummer: PCT/EP2011/052260
(87) Internationale Veröffentlichungsnummer: WO 2011/101363

(56) Entgegenhaltungen:
- WO-A1-02/23078
- DE-A1- 4 321 238
- DE-A1- 19 529 189
- DE-U1-202006 017 515
- GB-A- 1 112 421
- JP-A- 2007 146 917
- US-A- 3 378 283

## Beschreibung

Die Erfindung betrifft eine Wasseranschlussanordnung, umfassend
- ein Anschlussstück zum Einbau in die Rohrleitung eines Wassernetzes, insbesondere eines Hauswassernetzes,
- eine Anschlusseinrichtung, insbesondere ein Wasserbehandlungsgerät oder eine Armatur,
   wobei das Anschlussstück einen Flansch zum Anschließen der Anschlusseinrichtung und die Anschlusseinrichtung einen dazu passenden Gegenflansch aufweist,
   wobei der Flansch sowohl einen Anschluss für einen Wasserzulauf zur Anschlusseinrichtung als auch einen Anschluss für einen Wasserrücklauf von der Anschlusseinrichtung ausbildet,
- und ein oder mehrere Befestigungselemente.

Eine solche Wasseranschlussanordnung ist bekannt geworden durch die DE 195 29 189 C2.

In die Rohrleitungen von Wassernetzen werden in vielfältiger Weise Anschlusseinrichtungen, wie beispielsweise Wasserfilter oder Wasserenthärtungsanlagen, eingebaut. In der Rohrleitung ist dazu in der Regel ein so genanntes Anschlussstück eingesetzt, an dessen Flansch die Anschlusseinrichtung angeschlossen wird.

Um einen späteren Wasseraustritt zu vermeiden, werden dabei in der Regel mehrere Schrauben eingesetzt, die eine Flanschplatte des Anschlussstücks durchragen und in die Anschlusseinrichtung hineingeschraubt werden. Da das Anschlussstück in der Regel nahe vor einer Gebäudewand (etwa einer Kellerwand) in der Rohrleitung verbaut ist, ist das Einführen und Festziehen der Schrauben schwierig.

Um das Einführen der Schrauben an der Flanschplatte zu erleichtern, ist es bekannt, die Schrauben an der Anschlusseinrichtung vorzumontieren, und die Schraubenköpfe hinter Ausnehmungen an der Flanschplatte einzuschwenken (Bajonett-Prinzip), vgl. DE 195 29 189 C2. Die Ausnehmungen sind dazu meist nach außen hin offen, oder münden in eine größere Ausnehmung, durch die der Schraubenkopf hindurch passt. Die Schrauben brauchen nach dem Einschwenken dann nur noch festgezogen werden.

Allerdings bleibt auch bei Anwendung des Bajonett-Prinzips die Handhabung der Schrauben (bzw. der Schraubenköpfe) beim Festziehen schwierig, da die Schraubenköpfe hinter der Anschlusseinrichtung und nahe vor der Gebäudewand schlecht zugänglich sind. Die Montage einer Anschlusseinrichtung ist dann sehr umständlich und erfordert möglicherweise Spezialwerkzeug.

### Aufgabe der Erfindung

Es ist die Aufgabe der vorliegenden Erfindung, das Anschließen einer Anschlusseinrichtung, insbesondere eines Wasserbehandlungsgeräts, an ein Anschlussstück einer Rohrleitung zu vereinfachen und zu beschleunigen.

### Kurze Beschreibung der Erfindung

Diese Aufgabe wird gelöst durch eine Wasseranschlussanordnung der eingangs genannten Art, die dadurch gekennzeichnet ist, dass eine Verbindungseinheit vorgesehen ist, wobei das oder die Befestigungselemente so an der Verbindungseinheit und am Anschlussstück befestigt oder befestigbar sind, dass der maximale Abstand von Verbindungseinheit und Anschlussstück durch einen Anschlag begrenzt ist, und dass ein oder mehrere Spannmittel vorgesehen sind, die an der Verbindungseinheit und an der Anschlusseinrichtung angreifen, mit denen die Verbindungseinheit und die Anschlusseinrichtung in eine Spannrichtung gegeneinander verspannt werden können, so dass die Anschlusseinrichtung in Richtung ihrer Seite, an der der Gegenflansch ausgebildet ist (Rückseite), relativ zur Verbindungseinheit gezogen oder gedrückt wird und die Verbindungseinheit vom Anschlussstück weg bis zum Anschlag bewegt wird, wenn der Flansch des Anschlussstücks auf dem Gegenflansch der Anschlusseinrichtung anliegt.

Die vorliegende Erfindung schlägt vor, die Kraft zur Herstellung einer kraftschlüssigen Verbindung zwischen dem Flansch des Anschlussstücks und dem Gegenflansch der Anschlusseinrichtung indirekt aufzubringen, nämlich über eine Verbindungseinheit und ein Spannmittel, welches zwischen der Verbindungseinheit und der Anschlusseinrichtung wirkt. Eine direkte gegenseitige Befestigung der Anschlusseinrichtung am Anschlussstück erfolgt nicht.

Die Befestigung der Verbindungseinheit am Anschlussstück beschränkt sich auf eine Begrenzung des maximalen gegenseitigen Abstands senkrecht zur Flanschebene ("loses Verbinden"); mit anderen Worten, im lose verbundenen Zustand kann die Verbindungseinheit geringfügig (etwa einige Millimeter) vom Anschlussstück abgehoben (weg gezogen) werden, gelangt aber dann an einen Anschlag, der unter Beteiligung der Befestigungselemente ausgebildet wird. Das Verbinden der Verbindungseinheit mit dem Anschlussstück kann leicht nach dem oben beschriebenen Bajonett-Prinzip erfolgen, so dass hinter dem Flansch des Anschlussstücks kein Platz benötigt wird; ebenso kann auch eine Verbindung Ober das Einhaken von einem oder mehreren Haken erfolgen, die beispielsweise an der Verbindungseinheit ausgebildet oder befestigt sind; es ist weiterhin möglich, Befestigungselemente einzeln an Anschlussstück und Verbindungseinheit zu montieren und beispielsweise mit Splinten zu sichern.

Um den Gegenflansch gegen den Flansch zu drücken, kann die Verbindungseinheit gegen die Anschlusseinrichtung in einer Spannrichtung verspannt werden. Das oder die Spannmittel bewegen dabei die Verbindungseinheit und die Anschlusseinrichtung relativ zu einander, bevorzugt zumindest näherungsweise senkrecht zur Flanschebene. Im Rahmen dieser relativen Spannbewegung wird die Verbindungseinheit vom Anschlussstück weg, und die Anschlusseinrichtung auf das Anschlussstück zu (und damit in Richtung ihrer Seite, an der der Gegenflansch ausgebildet ist) bewegt. Je nach Reihung der Anschlusseinrichtung und der Verbindungseinheit bezüglich des Anschlussstücks kann dabei eine relative Spreizung oder ein relatives Zusammenziehen stattfinden.

In Folge der Spannbewegung wird die Verbindungseinheit gegen ihren durch die Befestigungselemente eingerichteten Anschlag gefahren. Durch das weitere Verspannen der Anschlusseinrichtung und der Verbindungseinheit wird dann die Anschlusseinrichtung in Spannrichtung mit ihrem Gegenflansch gegen den Flansch des Anschlussstücks gefahren und schließlich angepresst.

Da das Spannmittel nicht am Anschlussstück, sondern an der Verbindungseinheit und an der Anschlusseinrichtung angreift, kann dieses

(bevorzugt von der Vorderseite der Anschlusseinrichtung aus) leicht zugänglich ausgebildet werden. Insbesondere kann das Spannmittel deutlich entfernt von einer etwaigen Gebäudewand hinter dem Anschlussstück vorgesehen sein.

Im Rahmen der Erfindung ist die Verbindungseinheit insbesondere dazu ausgebildet, eine Zugkraft von der dem Gegenflansch abgewandten Seite (Vorderseite) der Anschlusseinrichtung aufzunehmen, so dass eine kraftschlüssige Verbindung zwischen Flansch und Gegenflansch hergestellt werden kann.

Als Spannmittel können insbesondere Schrauben eingesetzt werden. Im Rahmen der Erfindung werden unter Schrauben auch Schraubbolzen und mit Muttern versehene Gewindebolzen verstanden. Ebenso können als Befestigungselemente (Befestigungsmittel) insbesondere Schrauben eingesetzt werden.

### Bevorzugte Ausführungsformen der Erfindung

Bei einer bevorzugten Ausführungsform der erfindungsgemäßen Wasseranschlusseinrichtung weist die Verbindungseinheit an der dem Anschlussstück zugewandten Seite eine oder mehrere erste Bohrungen zur Aufnahme des oder der Befestigungselemente auf. Damit ist eine einfache Befestigung der Befestigungselemente möglich, insbesondere wenn die Bohrung ein Innengewinde für ein schraubenförmiges Befestigungselement umfasst.

Besonders bevorzugt ist eine Ausführungsform, die vorsieht, dass die Verbindungseinheit zwischen der Anschlusseinrichtung und dem Anschlussstück angeordnet ist,
insbesondere wobei die Verbindungseinheit eine Öffnung für einen Durchgriff eines Teils der Anschlusseinrichtung oder eines Teils des Anschlussstücks aufweist,
und dass durch das oder die Spannmittel die Verbindungseinheit und die Anschlusseinrichtung in Spannrichtung aufeinander zu verspannt werden können. In diesem Fall ist die Anschlusseinrichtung von ihrer Vorderseite (die dem Gegenflansch abgewandt ist) voll zugänglich und wird nicht von der Verbindungseinheit abgedeckt; weiterhin können die Befestigungselemente kurz ausgebildet werden. Das Zusammenziehen von Anschlusseinrichtung und Verbindungseinheit kann leicht mittels festzuziehenden Schrauben als Spannmittel erfolgen, die beispielsweise seitlich an der Anschlusseinrichtung geführt sind.

Eine vorteilhafte Weiterbildung dieser Ausführungsform sieht vor, dass am Gehäuse der Anschlusseinrichtung durchgehende zweite Bohrungen vorgesehen sind, und dass die der Anschlusseinrichtung zugewandte Seite der Verbindungseinheit dritte Bohrungen für als Zugelemente ausgebildete Spannmittel aufweist, wobei die Zugelemente von der dem Gegenflansch abgewandten Seite (Vorderseite) der Anschlusseinrichtung durch die zweiten Bohrungen in die dritten Bohrungen eingeführt sind. Dieser Aufbau ist leicht zu realisieren und gut zu handhaben. Die Verbindungseinheit, die an der dem Anschlussstück zugewandten Seite (Rückseite) der Anschlusseinrichtung angeordnet ist, hat beidseitig (zum Anschlussstück und zur Anschlusseinrichtung hin) Bohrungen zur Aufnahme der Befestigungselemente einerseits und der Zugelemente andererseits. Die Verbindungseinheit ist in dieser Variante als Losflansch ausgebildet und beweglich senkrecht zur Flanschebene. Sie übt beim Anziehen der von der Gerätevorderseite zugänglichen Zugelemente eine Zugkraft auf die Befestigungselemente am Anschlussstück aus. Dadurch entsteht eine kraftschlüssige Verbindung zwischen Flansch und Gegenflansch.

Bei einer bevorzugten Weiterbildung sind Druckfedern vorgesehen, deren Federkraft gegen die Zugkraft gerichtet ist. Durch die Druckfedern ist das Lösen der Befestigungselemente am Anschlussstück bei Demontage der Anschlusseinrichtung vereinfacht. Die Federkraft sorgt beim Lösen der Zugkraft dafür, dass die Verbindungseinheit entgegen der Zugrichtung (Spannrichtung) bewegt wird. Die an der Verbindungseinheit fixierten Befestigungselemente lösen sich damit vom Anschlussstück. Auch bei anderen Ausführungsformen können Federn vorgesehen sein, die gegen die Kraft des oder der Spannmittel wirken, um eine Demontage der Anschlusseinrichtung zu erleichtern.

Ebenfalls bevorzugt ist eine Weiterbildung, bei der die zweiten Bohrungen als Befestigungslaschen am Gehäuse der Anschlusseinrichtung ausgestaltet sind. Es sind dann lediglich geringe konstruktive Änderungen an einer üblichen Anschlusseinrichtung notwendig, um sie im Rahmen der Erfindung einsetzen zu können.

Weiterhin bevorzugt ist eine Weiterbildung, bei der die der Anschlusseinrichtung zugewandte Seite der Verbindungseinheit dritte Bohrungen für Zugelemente aufweist, wobei die Zugelemente an der dem Gegenflansch abgewandten Seite (Vorderseite) der Anschlusseinrichtung in einem Zugbügel fixiert sind. Dieser Aufbau ermöglicht eine besonders einfache Montage, weil zur Herstellung der kraftschlüssigen Verbindung zwischen Flansch und Gegenflansch lediglich eine Zugkraft am Zugbügel ausgeübt werden muss. Der Zugbügel befindet sich an der Vorderseite der Anschfusseinrichtung und ist leicht zugänglich. Am Zugbügel ist dann typischerweise mindestens (und bevorzugt lediglich) ein Spannmittel ausgebildet, mit dem der Zugbügel von der Vorderseite der Anschlusseinrichtung weg gezogen werden kann (Spreizung); insbesondere kann die Zugkraft mittels einer Montageschraube ausgeübt werden, die in einer zentralen (Gewinde-)Bohrung am Zugbügel gegen das Gehäuse der Anschlusseinrichtung gedreht wird. An der Anschlusseinrichtung sind regelmäßig keine besonderen Ausgestaltungen notwendig, um vom Zugbügel umgriffen werden zu können.

Bei einer vorteilhaften Ausgestaltung der Wasseranschlussanordnung ist die Anzahl der Zugelemente geringer als die Anzahl der Befestigungselemente. Der Aufbau ermöglicht eine einfache und schnelle Montage, weil vergleichsweise wenige Zugelemente festgezogen werden müssen. Beispielsweise können vier Befestigungselemente, die im Winkel von 90° zueinander angeordnet sind, sowie zwei Zugelemente, die im Winkel von 180° zueinander und auf Lücke zu den Befestigungselementen angeordnet sind, vorgesehen sein. Es kann auch allgemein vorgesehen sein, dass die Anzahl der zu bedienenden Spannmittel geringer ist als die Anzahl der Befestigungselemente.

Besonders bevorzugt ist eine Ausgestaltung, bei der die Befestigungselemente und die Zugelemente an der Verbindungseinheit vormontiert sind. Dadurch wird die Montage der Anschlusseinrichtung besonders einfach. Die Anschlusseinrichtung wird komplett als Ganzes mit der Verbindungseinheit und sämtlichen Befestigungs- und Zugelementen über die Befestigungselemente mit dem Anschlussstück lose verbunden, beispielsweise durch Einhängen der Befestigungselemente in einen Bajonettanschluss am Anschlussstück. Es müssen lediglich die Zugelemente an der Vorderseite der Anschlusseinrichtung festgezogen werden. Allgemein ist es bevorzugt, dass die Befestigungselemente und/oder die Spannmittel an der Verbindungseinheit vormontiert sind. Ebenso kann die Verbindungseinheit an der Anschlusseinrichtung vormontiert sein.

Eine andere Ausgestaltung sieht vor, dass die ersten und dritten Bohrungen jeweils gleichmäßig um den Umfang der Verbindungseinheit verteilt sind. Dadurch kann eine gleichmäßige Kraftverteilung auf zwischen Flansch und Gegenflansch angeordnete Dichtungen erreicht werden. Allgemein ist es auch bevorzugt, wenn die Befestigungselemente und die Spannmittel jeweils gleichmäßig um den Umfang der Verbindungseinheit verteilt sind.

Dabei ist es besonders bevorzugt, wenn die dritten Bohrungen auf Lücke zu den ersten Bohrungen angeordnet sind. Die Verbindungseinheit kann dann besonders flach ausgestaltet werden, und bietet insbesondere genug Platz sowohl für die ersten Bohrungen als auch für die dritten Bohrungen. Allgemein ist es auch bevorzugt, wenn die Spannmittel auf Lücke zu den Befestigungselementen angeordnet sind.

Bei einer anderen Ausgestaltung weist die Verbindungseinheit mit den ersten und dritten Bohrungen eine 2-zählige Drehachse auf. Die Verbindungseinheit kann dann besondere eine ringförmige oder quadratische Grundform aufweisen. Die 2-zählige Symmetrie sorgt für einen ausgewogenen Krafteintrag in die Dichtungen am Flansch und Gegenflansch.

Eine besonders bevorzugte Ausführungsform der erfindungsgemäßen Wasseranschlussanordnung sieht vor, dass die Anschlusseinrichtung zwischen der Verbindungseinheit und dem Anschlussstück angeordnet ist, insbesondere wobei die Anschlusseinrichtung einen oder mehrere Durchbrüche für das oder die Befestigungselemente aufweist,
und dass durch das oder die Spannmittel die Verbindungseinheit und die Anschlusseinrichtung in Spannrichtung voneinander weg verspannt werden können. Die Verbindungseinheit ist in dieser Ausführungsform an der dem Gegenflansch abgewandten Seite (Vorderseite) der Anschlusseinrichtung angeordnet. Der Aufbau der Verbindungseinheit braucht in dieser Ausführungsform keine Öffnung für einen Durchgriff einer Wasserdurchführung zu Flansch und Gegenflansch einzurichten.

Bei einer bevorzugten Weiterbildung dieser Ausführungsform weist die Verbindungseinheit eine zentrale Bohrung für eine Montageschraube auf. Die Montageschraube dient dann als Spannmittel, und kann die Verbindungseinheit und die Anschlusseinrichtung auseinander spreizen. Vorteilhaft ist hier insbesondere, dass nur die Montageschraube gespannt werden muss, um die kraftschlüssige Verbindung von Flansch und Gegenflansch einzurichten. Die Montageschraube wird bevorzugt von vorne in die zentrale Bohrung gegen das Gehäuse der Anschlusseinrichtung gedreht, wobei eine Zugkraft auf die Verbindungseinheit ausgeübt wird. Die Zugkraft wird über die Befestigungselemente auf das Anschlussstück übertragen, so dass eine kraftschlüssige Verbindung zwischen Flansch und Gegenflansch entsteht.

Bei einer vorteilhaften Ausführungsform ist eine Verstärkung am Gehäuse der Anschlusseinrichtung im Bereich des oder der Spannmittel vorgesehen. Die Verstärkung schützt das Gehäuse der Anschlusseinrichtung vor der Krafteinwirkung durch das oder die Spannmittel, etwa einer Montageschraube, und macht das Gehäuse so robuster.

Ebenfalls vorteilhaft ist eine Ausführungsform, bei der das oder die Befestigungselemente als Schrauben mit Verdrehsicherung ausgebildet sind. Die Schrauben mit Verdrehsicherung sind typischerweise in den ersten Bohrungen der Verbindungseinheit fixiert. Die Verdrehsicherungen vermeiden, dass die Montage (versehentlich) durch Festziehen der Befestigungselemente am Anschlussstück (an der Rückseite der Anschlusseinrichtung) versucht wird. Die Ausführungsform kann leicht hergestellt werden, und ermöglicht auch eine Nachjustierung der Befestigungselemente vor Ort (bei zeitweiligem Lösen der Verdrehsicherung).

Bevorzugt ist auch eine Ausführungsform, die vorsieht, dass ein oder mehrere Spannmittel als eine Schraube ausgebildet sind, wobei die Schraube in der Anschlusseinrichtung oder in der Verbindungseinheit drehbar gelagert ist, und wobei die Schraube gegen ein axiales Verschieben blockiert ist, insbesondere wobei die Schraube eine umlaufende Nut aufweist, in die ein Splint, welcher an der Anschlusseinrichtung oder der Verbindungseinheit befestigt ist, eingreift. Eine solche Schraube kann sehr gut zum Verspannen von Anschlusseinrichtung und Verbindungseinheit eingesetzt werden. In einem ersten Lager dreht die Schraube ohne axiale Verschiebung, und an einem zweiten, mit einem Innengewinde versehenen Lager wird das Bauteil, an dem das zweite Lager ausgebildet ist, durch die Drehbewegung der Schraube bzw. deren Gewinde axial bewegt.

Besonders bevorzugt ist eine Ausführungsform, die dadurch gekennzeichnet ist, dass das oder die Befestigungselemente im Bereich ihrer dem Anschlussstück zugewandten Enden jeweils eine Verbreiterung aufweisen, und dass am Anschlussstück für das oder die Befestigungselemente jeweils eine Ausnehmung vorgesehen ist, die von der Verbreiterung hintergriffen werden kann,
wobei die Ausnehmungen so ausgebildet sind, dass alle Befestigungselemente der Verbindungseinheit in ihre Ausnehmungen einschwenkbar sind, insbesondere wobei die Ausnehmungen nach außen hin offen sind oder in eine größere Ausnehmung münden, durch die die Verbreiterung hindurch passt. Dadurch kann die Montage ("loses Verbinden") der Verbindungseinheit am Anschlussstück sehr einfach und schnell nach dem Bajonett-Prinzip erfolgen. Die Verdickungen sind typischerweise Schraubenköpfe.

Ebenfalls bevorzugt ist eine Ausführungsform, bei der das Gehäuse der Anschlusseinrichtung ein oder mehrere Justierelemente, insbesondere eine oder mehrere Justiernocken, zur Ausrichtung der Verbindungseinheit aufweist. Durch die Justierelemente kann eine Sicherung gegen Verdrehen erfolgen, und die exakte Einbaulage der Anschlusseinrichtung kann leicht gesichert werden. Justiernocken können auch an der Verbindungseinheit und am Anschlussstück vorgesehen sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1: eine schematische Schrägansicht einer ersten Ausführungsform einer erfindungsgemäßen Wasseranschlussanordnung, mit einer mittig angeordneten Verbindungseinheit;
- Fig. 2: eine schematische Seitenansicht der Ausführungsform von Fig. 1;
- Fig. 3: eine schematische Schrägansicht einer zweiten Ausführungsform einer erfindungsgemäßen Wasseranschlussanordnung, mit einem Zugbügel;
- Fig. 4a: eine schematische Schrägansicht der Verbindungseinheit von Fig. 1 und Fig. 3, wobei die dem Anschlussstück zugewandte Seite dem Betrachter zugewandt ist;
- Fig. 4b: eine schematische Schrägansicht der Verbindungseinheit von Fig. 1 und Fig. 3, wobei die der Anschlusseinrichtung zugewandte Seite dem Betrachter zugewandt ist;
- Fig. 5: eine schematische Schrägansicht einer dritten Ausführungsform einer erfindungsgemäßen Wasseranschlussanordnung, mit einer mittig angeordneten Anschlusseinrichtung;
- Fig. 6: eine schematische Aufsicht auf einen Bajonettanschluss, zur Verwendung mit der Erfindung.

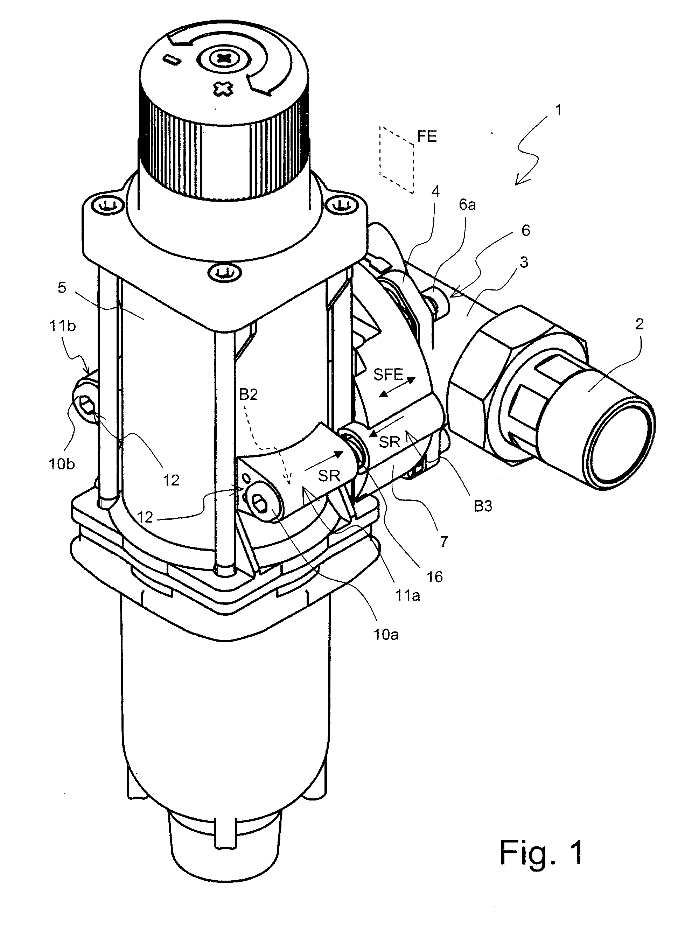

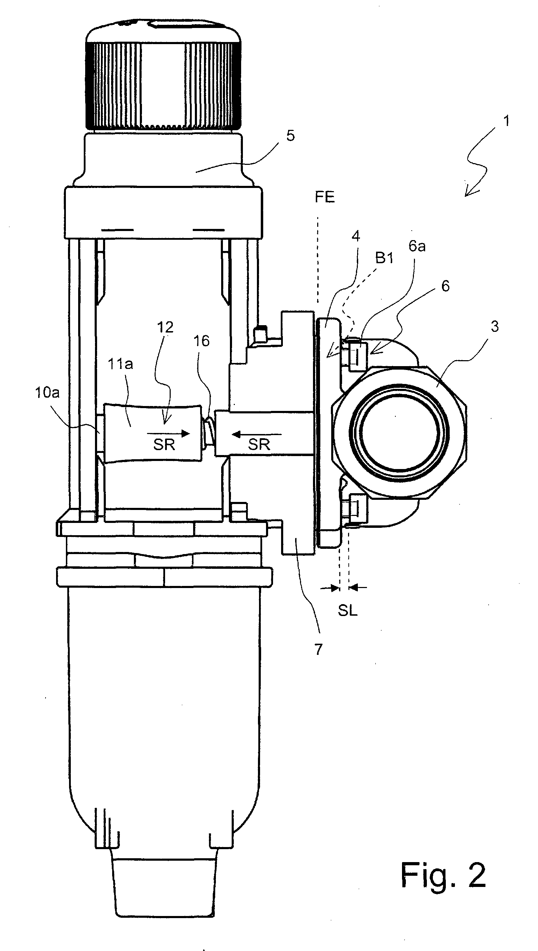

**Fig. 1** und **Fig. 2** zeigen eine erste Ausführungsform einer erfindungsgemäßen Wasseranschlussanordnung 1, eingebaut in eine Rohrleitung 2.

Die Wasseranschlussanordnung 1 umfasst eine Anschlusseinrichtung 5, hier einen Wasserfilter, eine Verbindungseinheit 7 sowie ein Anschlussstück 3. Das Anschlussstück 3 ist in die Rohrleitung 2 eingebaut. Die Verbindungseinheit 7 ist räumlich zwischen der Anschlusseinrichtung 5 und dem Anschlussstück 3 angeordnet.

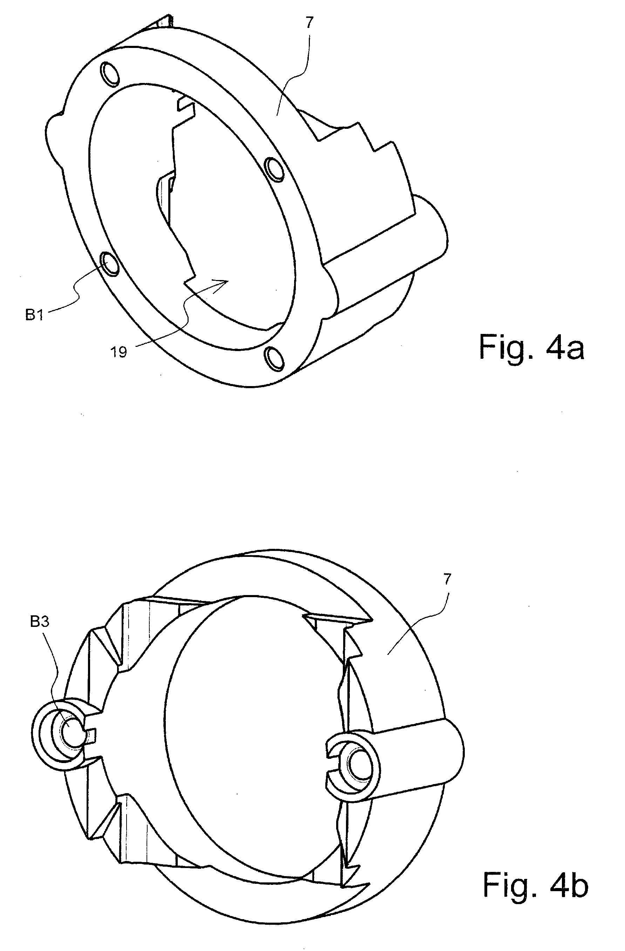

Für die Montage der Anschlusseinrichtung 5 ist diese bevorzugt bereits an der Verbindungseinheit 7 vormontiert, wobei die Anschlusseinrichtung 5 mittels Spannmitteln 12 an die Verbindungseinheit 7 angebunden ist. An der Verbindungseinheit 7 sind vier Befestigungselemente 6 (teilweise in Fig. 1 verdeckt), hier ausgebildet als Schrauben, in ersten Bohrungen B1 (siehe dazu auch Fig. 4a) befestigt, wobei die Befestigungselemente 6 mit endseitigen Verbreiterungen (Schraubenköpfen) 6a von der Verbindungseinheit 7 abstehen.

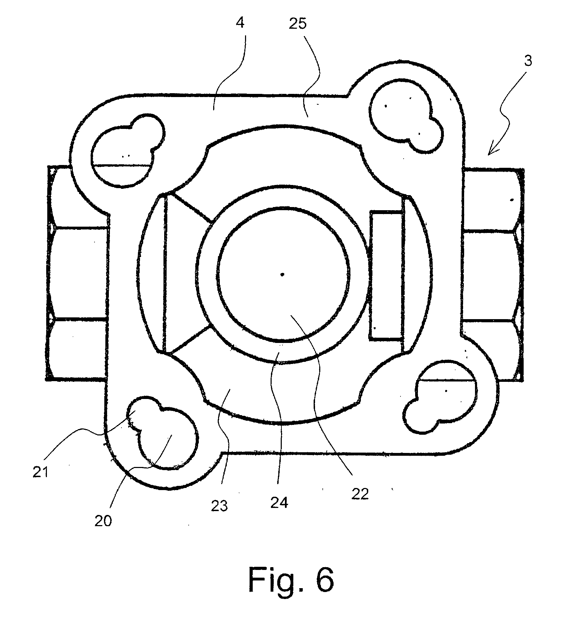

In einem ersten Montageschritt werden die Befestigungsmittel 6 in Ausnehmungen (siehe dazu Fig. 6) am Anschlussstück 3, ausgebildet in einem Bajonettanschluss 4, nach dem Bajonett-Prinzip eingeschwenkt, so dass die Verbindungseinheit 7 am Anschlussstück 3 eingehängt ist ("loses Verbinden"). Die Verbindungseinheit 7 hat über einen gewissen Weg in einer Richtung SFE senkrecht zur Flanschebene FE ein Spiel (vgl. Spiel SL in Fig. 2); nach hinten (in Fig. 1 nach rechts oben) ist dieser Weg durch den Bajonettanschluss 4 des Anschlussstücks 3 begrenzt, und nach vorne (in Fig. 1 nach links unten) ist dieser Weg durch den Hintergriff der Verbreiterungen 6a der Befestigungselemente 6 begrenzt.

Anschließend werden die Spannmittel 12 betätigt. Die Spannmittel 12 umfassen in der gezeigten Ausführungsform jeweils als Schrauben ausgebildete Zugelemente 10a, 10b, welche in dritte (Gewinde-)Bohrungen B3 an der Verbindungseinheit 7 eingeschraubt sind, und durch durchgehende zweite Bohrungen B2, ausgebildet in Befestigungslaschen 11a, 11b der Anschlusseinrichtung 5, geführt sind.

Zum Verspannen (und dichten Befestigen) der Anschlusseinrichtung 5 werden die Zugelemente 10a, 10b so gedreht, dass sich der Abstand von Anschlusseinrichtung 5 und Verbindungseinheit 7 verkürzt, vgl. die Bewegungspfeile der Spannrichtung SR. Dabei wird die Verbindungseinheit 7 vom Anschlussstück 3 weggezogen. Spätestens wenn die Verbindungseinheit 7 durch die Verbreiterungen 6a der Befestigungselemente 6 blockiert ist ("am Anschlag ist"), wird durch die Spannbewegung die Anschlusseinrichtung 5 zum Anschlussstück 3 hingezogen. Dadurch werden der Flansch des Anschlussstücks (verdeckt in Fig. 1, gelegen in der Flanschebene FE, am Bajonettanschluss 4) und der Gegenflansch der Anschlusseinrichtung 5 (verdeckt, ausgebildet an einem Ende eines die Verbindungseinheit 7 durchgreifenden Teils der Anschlusseinrichtung 5) schließlich kraftschlüssig miteinander verbunden.

Durch das Festziehen der beiden Zugelemente 10a, 10b an der Vorderseite der Anschlusseinrichtung 5 wird also eine Zugkraft auf die Verbindungseinheit 7 ausgeübt, die sich dadurch nach vorne bewegt ("Losflansch"). Die an der Verbindungseinheit 7 fixierten Befestigungselemente 6 übertragen die Zugkraft auf das Anschlussstück 3, so dass schließlich eine kraftschlüssige Verbindung zwischen dem Anschlussstück 3 und der Anschlusseinrichtung 5 gebildet wird.

Im gezeigten Beispiel müssen zur Herstellung der kraftschlüssigen Verbindung anstatt der insgesamt vier Befestigungselemente 6 an der Filterrückseite lediglich die beiden leicht zugängliche Zugelemente 10a, 10 b an der Filtervorderseite festgezogen werden.

Zum Demontieren werden die Spannmittel 12 wieder gelöst, wobei dieses Lösen durch Druckfedern 16 unterstützt wird, die die Anschlusseinrichtung 5 und die Verbindungseinheit 7 auseinander zu spreizen suchen.

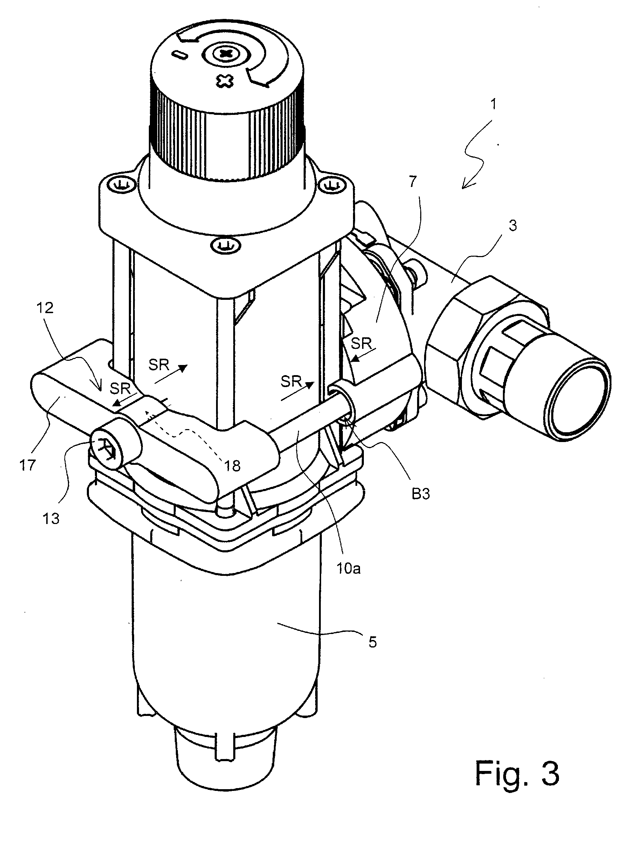

**Fig. 3** zeigt eine zweite Ausführungsform einer erfindungsgemäßen Wasseranschlussanordnung 1. Im folgenden werden die Unterschiede zur Ausführungsform von Fig. 1 erläutert.

Die Spannmittel 12 umfassen hier einen Zugbügel 17, welcher die Anschlusseinrichtung 5 an deren Vorderseite umgreift. Der Zugbügel 17 ist über Zugelemente (hier einfache Zugbolzen) 10a an der Verbindungseinheit 7 befestigt.

Zur Montage wird zunächst wieder die Verbindungseinheit 7 am Anschlussstück 3 eingehängt.

Anschließend wird eine Montageschraube 13, welche in einer Gewindebohrung 18 des Zugbügels 17 eingeschraubt ist, betätigt, wobei die Montageschraube 13 sich an der Vorderseite der Anschlusseinrichtung 5 abstützt und den Zugbügel 17 von der Anschlusseinrichtung 5 wegdrückt (Spreizung). Da der Zugbügel 17 an der Verbindungseinheit 7 befestigt ist, wird die Verbindungseinheit 7 in die gleiche Richtung wie der Zugbügel 17 gezogen, vgl. die Bewegungspfeile der Spannrichtung SR, so dass Verbindungseinheit 7 und Anschlusseinrichtung 5 in Spannrichtung SR zusammengezogen werden. Im Rahmen der Spannbewegung bewegt sich wiederum die Verbindungseinheit vom Anschlussstück 3 weg, und schließlich die Anschlusseinrichtung 5 auf das Anschlussstück 3 (und damit den Flansch) zu.

Bei der gezeigten Ausführungsform wird also die Zugkraft auf die Verbindungseinheit 7 dadurch bewirkt, dass die Montageschraube 13 in einer zentralen Bohrung 18 am Zugbügel 17 gegen das Gehäuse des Filters gedreht wird. Der Zugbügel 17 wird dabei nach vorne gezogen. Die am Zugbügel 17 fixierten Zugelemente 10a, 10b übertragen die Zugkraft auf die Verbindungseinheit 7.

Der Zugbügel 12 befindet sich an der Vorderseite des Filters 5 und ist damit für die Montage leicht zugänglich. Die Montage ist besonders einfach, weil nur eine Montageschraube 13 festgezogen werden muss.

Die Figuren 4a und 4b illustrieren die Verbindungseinheit von Fig. 1 und Fig. 3.

**Fig. 4a** zeigt die Verbindungseinheit 7 mit ihrer dem Anschlussstück (bzw. dem Flansch) zugewandten Seite im Vordergrund. Gut zu erkennen sind die vier ersten Bohrungen B1, welche der Aufnahme und Fixierung der Befestigungselemente dienen. Die Verbindungseinheit 7 weist eine Öffnung 19 für einen Durchgriff eines Teils (in der Regel) der Anschlusseinrichtung auf, durch den dann das Wasser zu und von der Anschlusseinrichtung zum Anschlussstück geleitet wird.

**Fig. 4b** zeigt die der Anschlusseinrichtung zugewandte Seite der Verbindungseinheit 7 im Vordergrund. Hier können insbesondere die beiden dritten Bohrungen B3 erkannt werden, in denen die Zugelemente aufgenommen und eingeschraubt (vgl. Fig. 1) und/oder fixiert (Fig. 3) werden können.

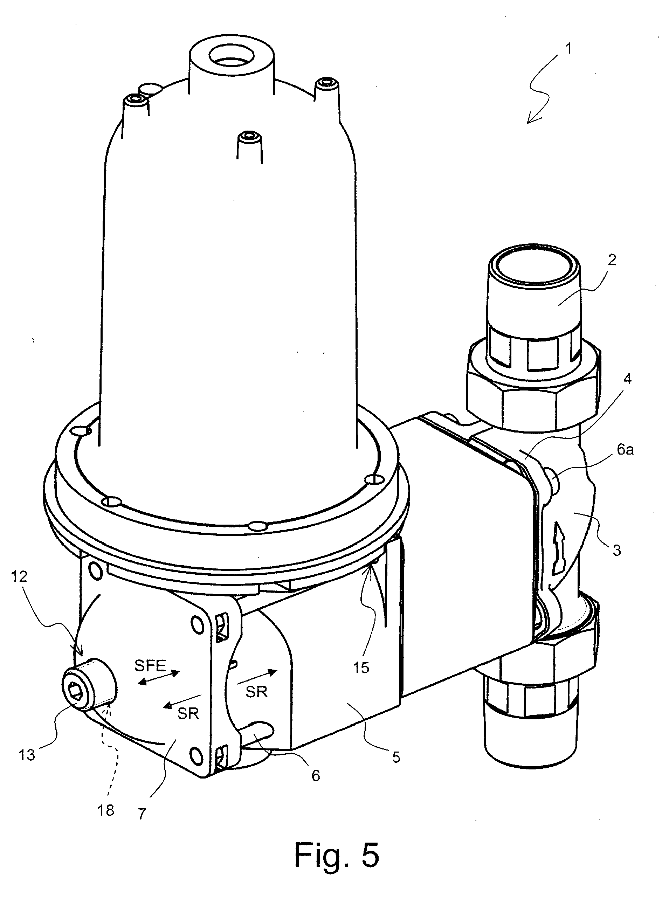

Die **Fig. 5** zeigt eine dritte Ausführungsform einer erfindungsgemäßen Wasseranschlussanordnung 1, wiederum umfassend ein Anschlussstück 3, welches in eine (hier vertikal ausgerichtete) Rohrleitung 2 eingesetzt ist, sowie eine Anschlusseinrichtung 5 und eine Verbindungseinheit 7. Es werden wiederum nur die wesentlichen Unterschiede zur Ausführungsform von Fig. 1 erläutert.

Die Verbindungseinheit 7 ist hier an der Vorderseite der Anschlusseinrichtung 5 angeordnet. Die Verbindungseinheit 7 muss daher mit vergleichsweise langen Befestigungselementen 6 an das Anschlussstück 3 (bzw. dessen Bajonettanschluss 4) angebunden werden, die durch Durchbrüche 15 in der Anschlusseinrichtung 5 führen.

Im lose verbundenen Zustand hat die Verbindungseinheit 7 in Richtung SFE senkrecht zur Flanschebene wiederum Spiel gegenüber dem Anschlussstück 3, welches aber insbesondere nach vorne (vom Anschlussstück 3 weg) durch die Verbreiterungen 6a der eingedrehten Befestigungselemente 6 begrenzt ist.

Um im Rahmen der Montage den Flansch des Anschlussstücks 3 und den Gegenflansch der Anschlusseinrichtung 5 kraftschlüssig zu verbinden, wird ein Spannmittel 12 genutzt, welches hier eine Montageschraube 13 umfasst, die zentral in einer Gewindebohrung 18 in der Verbindungseinheit 7 verläuft. Mit der Montageschraube 13 werden dabei die Anschlusseinrichtung 5 und die Verbindungseinheit 7 voneinander weg gespreizt, wobei sich die Montageschraube 13 (in einem in Fig. 5 verdeckten Bereich) auf die Vorderseite der Anschlusseinrichtung 5 abstützt. Die Bewegungspfeile dieser Spannrichtung SR sind eingezeichnet.

Durch Festziehen der die Verbindungseinheit 7 zentral durchdringenden Montageschraube 13 wird auf die Verbindungseinheit 7 eine Zugkraft ausgeübt. Diese wird über die Befestigungselemente 6 direkt auf das Anschlussstück 3 übertragen, so dass eine kraftschlüssige Verbindung zwischen dem Anschlussstück 3 und der Anschlusseinrichtung 5 gebildet wird.

Auch hier ist die Montage der Anschlusseinrichtung 5 an die Rohrleitung 2 besonders einfach, weil lediglich eine Montageschraube 13, die an der Vorderseite der Anschlusseinrichtung 5 angeordnet ist, festgezogen werden muss.

Fig. 6 zeigt in Aufsicht einen beispielhaften Bajonettanschluss 4 eines Anschlussstücks 3, wie es in den Ausführungsformen der Figuren 1, 3 oder 5 eingesetzt werden kann, von der Flanschseite. Mittels größerer Ausnehmungen 20 können Verbreiterungen (etwa Schraubenköpfe) von Befestigungselementen, die an einer Verbindungseinheit fixiert sind, durch den Bajonettanschluss 4 geführt werden. Anschließend kann die Verbindungseinheit geringfügig gedreht werden, so dass die nicht verbreiterten Teile der Befestigungselemente (etwa Schraubenschäfte) in die (engeren) Ausnehmungen 21 einschwenken, und die Verbreiterungen um die (engeren) Ausnehmungen 21 herum den Bjonettanschluss 4 hintergreifen.

Die Figur 6 zeigt ebenfalls den hier zentralen Zulauf 22 und den Rücklauf 23 des Anschlussstücks 3, sowie eine innere Dichtfläche 24, die Zulauf 22 und Rücklauf 23 gegeneinander abdichtet, sowie eine äußere Dichtfläche 25, die den Rücklauf 23 von der Umgebung abdichtet.

Bevorzugt wird im Rahmen der Erfindung, dass in der Flanschebene (hier Zeichenebene) sowohl der Anschluss für den Wasserzulauf 22 als auch der Anschluss für den Wasserrücklauf 23 ausgebildet ist.

### Bezugszeichenliste

1: Wasseranschlussanordnung
2: Rohrleitung
3: Anschlussstück
4: Bajonettanschluss
5: Anschlusseinrichtung (hier: Filter)
6: Befestigungselemente (hier: Schrauben)
6a: Verbreiterung (hier: Schraubenkopf)
7: Verbindungseinheit
10a, 10b: Zugelemente
11a, 11b: Befestigungslaschen
12: Spannmittel
13: Montageschraube
15: Durchbruch
16: Druckfeder
17: Zugbügel
18: zentrale Bohrung
19: Öffnung für Durchgriff
20: größere Ausnehmungen
21: Ausnehmungen
22: Zulauf
23: Rücklauf
24: innere Dichtfläche
25: äußere Dichtfläche
B1: erste Bohrungen
B2: zweite Bohrungen
B3: dritte Bohrungen
FE: Flanschebene
SL: Spiel
SFE: Spielrichtung senkrecht zur Flanschebene
SR: Spannrichtung

## Patentansprüche

1. Wasseranschlussanordnung (1), umfassend
- ein Anschlussstück (3) zum Einbau in die Rohrleitung (2) eines Wassernetzes, insbesondere eines Hauswassemetzes,
- eine Anschlusseinrichtung (5), insbesondere ein Wasserbehandlungsgerät oder eine Armatur,
wobei das Anschlussstück (3) einen Flansch zum Anschließen der Anschlusseinrichtung (5) und die Anschlusseinrichtung (5) einen dazu passenden Gegenflansch aufweist,
wobei der Flansch sowohl einen Anschluss für einen Wasserzulauf (22) zur Anschlusseinrichtung (5) als auch einen Anschluss für einen Wasserrücklauf (23) von der Anschlusseinrichtung (5) ausbildet,
- und ein oder mehrere Befestigungselemente (6),
**dadurch gekennzeichnet,**
**dass** eine Verbindungseinheit (7) vorgesehen ist, wobei das oder die Befestigungselemente (6) so an der Verbindungseinheit (7) und am Anschlussstück (3) befestigt oder befestigbar sind, dass der maximale Abstand von Verbindungseinheit (7) und Anschlussstück (3) durch einen Anschlag begrenzt ist,
und **dass** ein oder mehrere Spannmittel (12) vorgesehen sind, die an der Verbindungseinheit (7) und an der Anschlusseinrichtung (5) angreifen, und mit denen die Verbindungseinheit (7) und die Anschlusseinrichtung (5) in eine Spannrichtung (SR) gegeneinander verspannt werden können, so dass die Anschlusseinrichtung (5) in Richtung ihrer Seite, an der der Gegenflansch ausgebildet ist (Rückseite), relativ zur Verbindungseinheit (7) gezogen oder gedrückt wird und die Verbindungseinheit (7) vom Anschlussstück (3) weg bis zum Anschlag bewegt wird, wenn der Flansch
des Anschlussstücks (3) auf dem Gegenflansch derAnschlusseinrichtung (5) anliegt.

2. Wasseranschlussanordnung (1) nach Anspruch 1, **dadurch gekennzeichnet, dass** die Verbindungseinheit (7) an der dem Anschlussstück (3) zugewandten Seite eine oder mehrere erste Bohrungen (B1) zur Aufnahme des oder der Befestigungselemente (6) aufweist.

3. Wasseranschlussanordnung (1) nach einem der vorhergehenden Ansprüche, **dadurch gekennzeichnet, dass** die Verbindungseinheit (7) zwischen der Anschlusseinrichtung (5) und dem Anschlussstück (3) angeordnet ist,
insbesondere wobei die Verbindungseinheit (7) eine Öffnung (19) für einen Durchgriff eines Teils der Anschlusseinrichtung (5) oder eines Teils des Anschlussstücks (3) aufweist,
und dass durch das oder die Spannmittel (12) die Verbindungseinheit (7) und die Anschlusseinrichtung (5) in Spannrichtung (SR) aufeinander zu verspannt werden können.

4. Wasseranschlussanordnung (1) nach Anspruch 3, **dadurch gekennzeichnet, dass** am Gehäuse der Anschlusseinrichtung (5) durchgehende zweite Bohrungen (B2) vorgesehen sind, und dass die der Anschlusseinrichtung (5) zugewandte Seite der Verbindungseinheit (7) dritte Bohrungen (B3) für als Zugelemente (10a, 10b) ausgebildete Spannmittel (12) aufweist, wobei die Zugelemente (10a, 10b) von der dem Gegenflansch abgewandten Seite (Vorderseite) der Anschlusseinrichtung (5) durch die zweiten Bohrungen (B2) in die dritten Bohrungen (B3) eingeführt sind.

5. Wasseranschlussanordnung (1) nach Anspruch 3 oder 4, **dadurch gekennzeichnet, dass** Druckfedern (16) vorgesehen sind, deren Federkraft gegen die Zugkraft gerichtet ist

6. Wasseranschlussanordnung (1) nach einem der Ansprüche 3 bis 5,
**dadurch gekennzeichnet, dass** die zweiten Bohrungen (B2) als Befestigungslaschen (11a, 11b) am Gehäuse der Anschlusseinrichtung (5) ausgestaltet sind.

7. Wasseranschlussanordnung (1) nach Anspruch 3, **dadurch gekennzeichnet, dass** die der Anschlusseinrichtung (5) zugewandte Seite der Verbindungseinheit (7) dritte Bohrungen (B3) für Zugelemente (10a, 10b) aufweist, wobei die Zugelemente (10a, 10b) an der dem Gegenflansch abgewandten Seite (Vorderseite) der Anschlusseinrichtung (5) in einem Zugbügel (17) fixiert sind.

8. Wasseranschlussanordnung (1) nach einem der Ansprüche 4 bis 7,
**dadurch gekennzeichnet, dass** die Anzahl der Zugelemente (10a, 10b) geringer ist als die Anzahl der Befestigungselemente (6).

9. Wasseranschlussanordnung (1) nach einem der Ansprüche 4 bis 8,
**dadurch gekennzeichnet, dass** die Befestigungselemente (6) und die Zugelemente (10a, 10b) an der Verbindungseinheit (7) vormontiert sind.

10. Wasseranschlussanordnung (1) nach Anspruch 2 und einem der Ansprüche 4 bis 9, **dadurch gekennzeichnet, dass** die ersten und dritten Bohrungen (B1 und B3) jeweils gleichmäßig um den Umfang der Verbindungseinheit (7) verteilt sind.

11. Wasseranschlussanordnung (1) nach Anspruch 10, **dadurch gekennzeichnet, dass** die dritten Bohrungen (B3) auf Lücke zu den ersten Bohrungen (B1) angeordnet sind.

12. Wasseranschlussanordnung (1) nach Anspruch 2 und einem der Ansprüche 4 bis 11, **dadurch gekennzeichnet, dass** die Verbindungseinheit (7) mit den ersten und dritten Bohrungen (B1 und B3) eine 2-zählige Drehachse aufweist.

13. Wasseranschlussanordnung (1) nach Anspruch 1 oder 2, **dadurch gekennzeichnet, dass** die Anschlusseinrichtung (5) zwischen der Verbindungseinheit (7) und dem Anschlussstück (5) angeordnet ist, insbesondere wobei die Anschlusseinrichtung (5) einen oder mehrere Durchbrüche (15) für das oder die Befestigungselemente (6) aufweist, und dass durch das oder die Spannmittel (12) die Verbindungseinheit (7) und die Anschlusseinrichtung (5) in Spannrichtung (SR) voneinander weg verspannt werden können.

14. Wasseranschlussanordnung (1) nach Anspruch 13, **dadurch gekennzeichnet, dass** die Verbindungseinheit (7) eine zentrale Bohrung (18) für eine Montageschraube (13) aufweist.

15. Wasseranschlussanordnung (1) nach einem der vorhergehenden Ansprüche, **dadurch gekennzeichnet, dass** eine Verstärkung am Gehäuse der Anschlusseinrichtung (5) im Bereich des oder der Spannmittel (12) vorgesehen ist

16. Wasseranschlussanordnung (1) nach einem der vorhergehenden Ansprüche, **dadurch gekennzeichnet, dass** das oder die Befestigungselemente (6) als Schrauben mit Verdrehsicherung ausgebildet sind.

17. Wasseranschlussanordnung (1) nach einem der vorhergehenden Ansprüche, **dadurch gekennzeichnet, dass** ein oder mehrere Spannmittel (12) als eine Schraube ausgebildet sind, wobei die Schraube in der Anschlusseinrichtung (5) oder in der Verbindungseinheit (7) drehbar gelagert ist, und wobei die Schraube gegen ein axiales Verschieben blockiert ist,
insbesondere wobei die Schraube eine umlaufende Nut aufweist, in die ein Splint, welcher an der Anschlusseinrichtung (5) oder der Verbindungseinheit (7) befestigt ist, eingreift.

18. Wasseranschlussanordnung (1) nach einem der vorhergehenden Ansprüche, **dadurch gekennzeichnet, dass** das oder die Befestigungselemente (6) im Bereich ihrer dem Anschlusstück (3) zugewandten Enden jeweils eine Verbreiterung (6a) autweisen,
und dass am Anschlussstück (3) für das oder die Befestigungselemente (6) jeweils eine Ausnehmung (21) vorgesehen ist, die von der Verbreiterung (6a) hintergriffen werden kann,
wobei die Ausnehmungen (21) so ausgebildet sind, dass alle Befestigungselemente (6) der Verbindungseinheit (7) in ihre Ausnehmungen (21) einschwenkbar sind,
insbesondere wobei die Ausnehmungen (21) nach außen hin offen sind oder in eine großereAusnehmung (20) münden, durch die die Verbreiterung (6a) hindurch passt.

19. Wasseranschlussanordnung (1) nach einem der vorhergehenden Ansprüche, **dadurch gekennzeichnet, dass** das Gehäuse der Anschlusseinrichtung (5) ein oder mehrere Justierelemente, insbesondere eine oder mehrere Justiernocken, zur Ausrichtung der Verbindungseinheit (7) aufweist.

## Claims

1. Water connection arrangement (1) comprising
- a connection piece (3) for installation into the pipeline (2) of a water network, in particular a domestic water supply system,
- a connection device (5), in particular a water treatment device or a fitting,
wherein the connection piece (3) has a flange for connecting the connection device (5) and the connection device (5) has a counterpart flange adapted thereto,
wherein the flange forms both a connection for a water supply (22) to the connection device (5) and also a connection for a water return (23) from the connection device (5),
- and one or more fastening elements (6),
**characterized in that**
an attachment unit (7) is provided, wherein the one or more fastening elements (6) are or can be fastened to the attachment unit (7) and to the connection piece (3) such that the maximum spacing of the attachment unit (7) and connection piece (5) is limited by a stop, and
one or more clamping means (12) are provided which engage the attachment unit (7) and the connection device (5) and by means of which the attachment unit (7) and the connection device (5) can be clamped against one another in a clamping direction (SR) such that the connection device (5) is pulled or pushed relative to the attachment unit (7) in the direction of that side of the connection device on which the counterpart flange is formed (rear side), and the attachment unit (7) is moved away from the connection piece (3) up to the stop when the flange of the connection piece (3) abuts the counterpart flange of the connection device (5).

2. Water connection arrangement (1) according to claim 1, **characterized in that** the attachment unit (7) has one or more first bores (B1) on the side facing the connection piece (3) for receiving the one or more fastening elements (6).

3. Water connection arrangement (1) according to any one of the preceding claims, **characterized in that** the attachment unit (7) is arranged between the connection device (5) and the connection piece (3),
in particular wherein the attachment unit (7) comprises an opening (19) for passage of part of the connection device (5) or part of the connection piece (3), and
the attachment unit (7) and the connection device (5) can be clamped towards one another in the clamping direction (SR) by means of the one or more clamping means (12).

4. Water connection arrangement (1) according to claim 3, **characterized in that** continuous second bores (B2) are provided on the housing of the connection device (5), and third bores (B3) are provided on the side of the attachment unit (7) facing the connection device (5) for clamping means (12) designed in the form of tensile elements (10a, 10b), wherein the tensile elements (10a, 10b) are inserted from the side (front side) of the connection device (5) facing away from the counterpart flange through the second bores (B2) into the third bores (B3).

5. Water connection arrangement (1) according to claim 3 or 4, **characterized in that** pressure springs (16) are provided, the spring force of which acts against the tensile force.

6. Water connection arrangement (1) according to any one of the claims 3 to 5, **characterized in that** the second bores (B2) are designed in the form of attachment lugs (11a, 11b) on the housing of the connection device (5).

7. Water connection arrangement (1) according to claim 3, **characterized in that** the side of the attachment unit (7) facing the connection device (5) comprises third bores (B3) for tensile elements (10a, 10b), wherein the tensile elements (10a, 10b) are fixed in a tensioning bracket (17) on the side (front side) of the connection device (5) facing away from the counterpart flange.

8. Water connection arrangement (1) according to any one of the claims 4 to 7, **characterized in that** the number of tensile elements (10a, 10b) is lower than the number of fastening elements (6).

9. Water connection arrangement (1) according to any one of the claims 4 to 8, **characterized in that** the fastening elements (6) and the tensile elements (10a, 10b) are preassembled on the attachment unit (7).

10. Water connection arrangement (1) according to claim 2 and any one of the claims 4 to 9, **characterized in that** the first and third bores (B1 and B3) are each uniformly distributed around the periphery of the attachment unit (7).

11. Water connection arrangement (1) according to claim 10, **characterized in that** the third bores (B3) are arranged offset with respect to the first bores (B1).

12. Water connection arrangement (1) according to claim 2 and one of the claims 4 to 11, **characterized in that** the attachment unit (7) has a two-fold axis of symmetry with respect to the first and third bores (B1 and B3).

13. Water connection arrangement (1) according to claim 1 or 2, **characterized in that** the connection device (5) is arranged between the attachment unit (7) and the connection piece (5), in particular wherein the connection device (5) comprises one or more openings (15) for the one or more fastening elements (6), and that the attachment unit (7) and the connection device (5) can be clamped away from each other in the tensioning direction (SR) by the clamping means (12).

14. Water connection arrangement (1) according to claim 13, **characterized in that** the attachment unit (7) comprises a central bore (18) for a mounting screw (13).

15. Water connection arrangement (1) according to any one of the preceding claims, **characterized in that** a reinforcement is provided on the housing of the connection device (5) in the area of the one or more clamping means (12).

16. Water connection arrangement (1) according to any one of the preceding claims, **characterized in that** the one or more fastening elements (6) are designed in the form of screws with anti-twist protection.

17. Water connection arrangement (1) according to any one of the preceding claims, **characterized in that** one or more clamping means (12) are designed in the form of a screw, wherein the screw is rotatably disposed in the connection device (5) or in the attachment unit (7) and wherein the screw is locked against axial displacement,
in particular, wherein the screw comprises a circumferential groove into which a cotter pin engages which is attached to the connection device (5) or the attachment unit (7).

18. Water connection arrangement (1) according to any one of the preceding claims, **characterized in that** the one or more fastening elements (6) each have a widening (6a) in the area of their ends facing the connection piece (3),
and that a recess (21) is provided on the connection piece (3) for each of the one or more fastening elements (6), behind which the widening (6a) can engage,
wherein the recesses (21) are designed such that all fastening elements (6) of the attachment unit (7) can be pivoted into their recesses (21),
in particular, wherein the recesses (21) are open to the outside or terminate in a larger recess (20) through which the widening (6a) fits.

19. Water connection arrangement (1) according to any one of the preceding claims, **characterized in that** the housing of the connection device (5) has one or more adjustment elements, in particular one or more adjustment cams, for aligning the attachment unit (7).

## Revendications

1. Système de prise d'eau (1), comprenant
- un élément de raccordement (3) à installer dans la canalisation (2) d'un réseau de distribution, en particulier d'un réseau de distribution domestique,
- un dispositif à raccorder (5), en particulier un appareil de traitement d'eau ou un appareil de robinetterie,
l'élément de raccordement (3) présentant une bride pour le raccordement du dispositif à raccorder (5) et ce dernier (5) présentant une contre-bride correspondante,
la bride formant un raccordement pour une amenée d'eau (22) vers le dispositif à raccorder (5) ainsi qu'un raccordement pour un retour d'eau (23) provenant du dispositif à raccorder (5),
- et un ou plusieurs éléments de fixation (6),
**caractérisé en ce qu'**il est prévu une unité de liaison (7), le ou les éléments de fixation (6) étant ou pouvant être fixés à l'unité de liaison (7) et à l'élément de raccordement (3) de telle sorte que la distance maximale entre l'unité de liaison (7) et l'élément de raccordement (3) est limitée par une butée,
et **en ce qu'**il est prévu un ou plusieurs moyens de serrage (12), qui agissent sur l'unité de liaison (7) et sur le dispositif à raccorder (5) et par lesquels l'unité de liaison (7) et le dispositif à raccorder (5) peuvent être mutuellement assemblés avec serrage dans une direction de serrage (SR), de sorte que le dispositif de raccordement (5) est tiré ou poussé par rapport à l'unité de liaison (7) en direction de son côté sur lequel est formée la contre-bride (côté arrière), et que l'unité de liaison (7) est déplacée en éloignement de l'élément de raccordement (3) jusqu'à la butée lorsque la bride de l'élément de raccordement (3) s'applique sur la contre-bride du dispositif à raccorder (5).

2. Système de prise d'eau (1) selon la revendication 1, **caractérisé en ce que** l'unité de liaison (7) présente, sur le côté tourné vers l'élément de raccordement (3), un ou plusieurs premiers perçages (B1) pour recevoir le ou les éléments de fixation (6).

3. Système de prise d'eau (1) selon l'une des revendications précédentes, **caractérisé en ce que** l'unité de liaison (7) est disposée entre le dispositif à raccorder (5) et l'élément de raccordement (3),
l'unité de liaison (7) présentant notamment une ouverture (19) pour le passage d'une partie du dispositif à raccorder (5) ou d'une partie de l'élément de raccordement (3),
et **en ce que**, par le ou les moyens de serrage (12), l'unité de liaison (7) et le dispositif à raccorder (5) peuvent être assemblés avec serrage l'un vers l'autre dans la direction de serrage (SR).

4. Système de prise d'eau (1) selon la revendication 3, **caractérisé en ce que** des deuxièmes perçages traversants (B2) sont prévus sur le boîtier du dispositif à raccorder (5), et **en ce que** le côté de l'unité de liaison (7) qui est tourné vers le dispositif à raccorder (5) présente des troisièmes perçages (B3) pour des moyens de serrage (12) réalisés sous forme d'éléments de traction (10a, 10b), les éléments de traction (10a, 10b) étant introduits dans les troisièmes perçages (B3) à travers les deuxièmes perçages (B2) par le côté du dispositif à raccorder (5) qui est opposé à la contre-bride (côté avant).

5. Système de prise d'eau (1) selon la revendication 3 ou 4, **caractérisé en ce qu'**il est prévu des ressorts de pression (16) dont la force de ressort est dirigée à l'encontre de la force de traction.

6. Système de prise d'eau (1) selon l'une des revendications 3 à 5, **caractérisé en ce que** les deuxièmes perçages (B2) sont réalisés sous la forme de pattes de fixation (11a, 11b) sur le boîtier du dispositif à raccorder (5).

7. Système de prise d'eau (1) selon la revendication 3, **caractérisé en ce que** le côté de l'unité de liaison (7) qui est tourné vers le dispositif à raccorder (5) présente des troisièmes perçages (B3) pour des éléments de traction (10a, 10b), les éléments de traction (10a, 10b) étant fixés en position dans un étrier de traction (17) sur le côté du dispositif à raccorder (5) qui est opposé à la contre-bride (côté avant).

8. Système de prise d'eau (1) selon l'une des revendications 4 à 7, **caractérisé en ce que** le nombre d'éléments de traction (10a, 10b) est inférieur au nombre d'éléments de fixation (6).

9. Système de prise d'eau (1) selon l'une des revendications 4 à 8, **caractérisé en ce que** les éléments de fixation (6) et les éléments de traction (10a, 10b) sont préassemblés sur l'unité de liaison (7).

10. Système de prise d'eau (1) selon la revendication 2 et l'une des revendications 4 à 9, **caractérisé en ce que** les premiers et troisièmes perçages (B1 et B3) sont respectivement uniformément répartis autour de la périphérie de l'unité de liaison (7).

11. Système de prise d'eau (1) selon la revendication 10, **caractérisé en ce que** les troisièmes perçages (B3) sont disposés à intervalles par rapport aux premiers perçages (B1).

12. Système de prise d'eau (1) selon la revendication 2 et l'une des revendications 4 à 11, **caractérisé en ce que** l'unité de liaison (7) munie des premiers et troisièmes perçages (B1 et B3) présente un axe de rotation binaire.

13. Système de prise d'eau (1) selon la revendication 1 ou 2, **caractérisé en ce que** le dispositif à raccorder (5) est disposé entre l'unité de liaison (7) et l'élément de raccordement (3), le dispositif à raccorder (5) présentant notamment un ou plusieurs percements (15) pour le ou les éléments de fixation (6), et **en ce que**, par le ou les moyens de serrage (12), l'unité de liaison (7) et le dispositif à raccorder (5) peuvent être mutuellement assemblés avec serrage en éloignement l'un de l'autre dans la direction de serrage (SR).

14. Système de prise d'eau (1) selon la revendication 13, **caractérisé en ce que** l'unité de liaison (7) présente un perçage central (18) pour un boulon de montage (13).

15. Système de prise d'eau (1) selon l'une des revendications précédentes, **caractérisé en ce qu'**un renforcement est prévu sur le boîtier du dispositif à raccorder (5) dans la région du ou des moyens de serrage (12).

16. Système de prise d'eau (1) selon l'une des revendications précédentes, **caractérisé en ce que** le ou les éléments de fixation (6) sont réalisés sous forme de boulons avec blocage en rotation.

17. Système de prise d'eau (1) selon l'une des revendications précédentes, **caractérisé en ce qu'**un ou plusieurs moyens de serrage (12) sont réalisés sous la forme d'un boulon, le boulon étant monté à rotation dans le dispositif à raccorder (5) ou dans l'unité de liaison (7) et le boulon étant bloqué en déplacement axial,
le boulon présentant notamment une rainure entourante dans laquelle s'engage une goupille qui est fixée sur le dispositif à raccorder (5) ou l'unité de liaison (7).

18. Système de prise d'eau (1) selon l'une des revendications précédentes, **caractérisé en ce que** le ou les éléments de fixation (6) présentent respectivement un élargissement (6a) dans la région de leurs extrémités tournées vers l'élément de raccordement (3),
et **en ce qu'**un évidement respectif (21), dans lequel peut s'engager par l'arrière l'élargissement (6a), est prévu sur l'élément de raccordement (3) pour le ou les éléments de fixation (6),
les évidements (21) étant configurés de telle sorte que tous les éléments de fixation (6) de l'unité de liaison (7) peuvent être rentrés par pivotement dans leurs évidements (21), les évidements (21) étant notamment ouverts vers l'extérieur, ou débouchant dans un évidement plus grand (20) à travers lequel passe l'élargissement (6a).

19. Système de prise d'eau (1) selon l'une des revendications précédentes, **caractérisé en ce que** le boîtier du dispositif à raccorder (5) présente un ou plusieurs éléments d'ajustement, en particulier un ou plusieurs ergots d'ajustement, pour aligner l'unité de liaison (7).
